# EUROPÄISCHE PATENTSCHRIFT

(11) **EP 1 273 793 B1**
(45) Veröffentlichungstag und Bekanntmachung des Hinweises auf die Patenterteilung: **06.07.2005**
(21) Anmeldenummer: 02007123.9
(22) Anmeldetag: 28.03.2002
(51) Int. Cl.: F02M 55/00, F16B 39/00

(54) **Schraubsicherung zur Drehblockierung eines Schraubteils**
Screw locking device for blocking the rotation of a screw element
Dispositif de sécurité pour le blocage en rotation d'un élément à vis

(30) Priorität: 07.07.2001 DE 10133164
(43) Veröffentlichungstag der Anmeldung: 08.01.2003
(73) Patentinhaber: ROBERT BOSCH GMBH, 70442 Stuttgart (DE)
(72) Erfinder: Vahle, Dirk, 71282 Hemmingen (DE); Doseth, Juergen, 70469 Stuttgart (DE)

(56) Entgegenhaltungen:
- DE-A- 2 213 901
- DE-A- 3 205 587
- DE-C- 818 885
- GB-A- 624 386
- US-A- 5 094 491

## Beschreibung

### Stand der Technik

Die Erfindung geht von einem Brennstoffeinspritzventil nach dem Oberbegriff des Anspruchs 1 aus. Eine solche Vorrichtung ist beispielsweise aus der Schrift DE 197 55 062 A1 bekannt, wo das Gewinde in einem als Ventilkörper ausgebildeten Bauteil als Innengewinde gefertigt ist und das Schraubteil als Druckrohrstutzen, welcher ein Außengewinde aufweist. Der Druckrohrstutzen ist mit seinem Außengewinde in das Innengewinde am Bauteil eingeschraubt, so dass Kraftstoff durch einen im Druckrohrstutzen ausgebildeten Kanal dem Bauteil zugeführt werden kann. Hierbei tritt an dem bekannten Schraubteil jedoch der Nachteil auf, dass sich dieses im Laufe der Zeit lockern kann. Falls an dem Schraubteil ein weiteres Gewinde koaxial zum Einschraubgewinde ausgebildet ist, an dem ein weiteres Teil angeschraubt ist, so tritt darüber hinaus der Nachteil auf, dass beim Lösen des weiteren Gewindes das Einschraubgewinde ebenfalls gelöst werden kann. Um dies zu verhindern, muss beispielsweise mit Hilfe eines Haltewerkzeugs eine Gegenkraft auf das Schraubteil ausgeübt werden, wenn das weitere Gewinde gelöst wird. Dies ist umständlich und darüber hinaus, steht häufig der erforderliche Raum nicht zur Verfügung, um das Haltewerkzeug am Schraubteil anzubringen, insbesondere, wenn das Schraubteil Teil einer Kraftstoffeinspritzeinrichtung für Brennkraftmaschinen ist

### Vorteile der Erfindung

Das erfindungsgemäße Brennstoffeinspritzventil besitzt die Merkmale des Hauptanspruchs.

Die Schraubsicherung zur Drehblockierung eines Schraubteils in einem Gewinde weist dagegen den Vorteil auf, dass das Einschraubgewinde im Gewinde des Bauteils in einfacher Art und Weise nach dem Einschrauben drehfixierbar ist. Über dem Schraubteil wird eine Sicherungshülse angeordnet, wobei die Sicherungshülse gegen das Bauteil in Drehrichtung des Gewindes fixierbar ist. Nach dem Einschrauben des Schraubteils im Gewinde des Bauteils wird die Sicherungshülse in Vertiefungen, die an der Außenseite des Schraubteils ausgebildet sind, eingeformt, so dass die Sicherungshülse in Drehrichtung des Einschraubgewindes gesichert auf dem Schraubteil fixiert ist. Da die Sicherungshülse nunmehr sowohl gegenüber dem Bauteil als auch gegenüber dem Schraubteil fixiert ist, ergibt sich eine Sicherung des in das Gewinde des Bauteils eingeschraubten Schraubteils gegen Lösen.

Die Schraubsicherung zur Drehblockierung des Schraubteils ist kostengünstig und einfach zu montieren. Der benötigte Bauraum ist durch die Ausbildung der Sicherungshülse als relativ dünnwandige Metallhülse nur minimal, so dass sich eine vielseitige Einsetzbarkeit ergibt. Zur Schraubsicherung ist keine spanende Bearbeitung eines Werkstücks notwendig, so dass es zu keinen Fehlern durch verstreute Metallspäne kommen kann. Da keine Bohrungen oder sonstige tiefe Ausnehmungen notwendig sind, ergibt sich keine Schwächung des Schraubteils oder des das Schraubteil aufnehmenden Bauteils. Darüber hinaus lässt sich die Sicherungshülse mit relativ wenig Aufwand wieder entfernen, sollte es notwendig werden, die Schraubverbindung zu lösen.

In einer vorteilhaften Ausgestaltung des Gegenstandes der Erfindung sind am Bauteil Vertiefungen ausgebildet, in die die Sicherungshülse mit entsprechenden Anformungen eingreift und so fixierbar ist. Man erhält so eine einfache und leicht herzustellende Verbindung der Sicherungshülse gegenüber dem Bauteil, so dass sich die Sicherungshülse nicht mehr gegen der Bauteil verdrehen kann. Es kann hierbei vorgesehen sein, mehr als eine Anformung an der Sicherungshülse auszubilden, wobei diese Anformungen vorzugsweise gleichmäßig über den Umfang verteilt angeordnet sind. Hierdurch erhält man eine gleichmäßige Einleitung der fixierenden Kraft über den gesamten Umfang der Sicherungshülse.

In einer weiteren vorteilhaften Ausgestaltung weist das Schraubteil einen im wesentlichen zylinderförmigen Abschnitt auf, an dem ein Kerbprofil vorhanden ist. Die Sicherungshülse umgibt diesen gekerbten Abschnitt, so dass die Sicherungshülse beim radialen Einformen in die das Kerbprofil bildenden Vertiefungen eingreift. Hierdurch erhält man in sehr einfacher Art und Weise eine Drehfixierung der Sicherungshülse auf dem Schraubteil.

In einer weiteren vorteilhaften Ausgestaltung ist am Schraubteil ein in tangentialer Richtung verlaufender Freistich ausgebildet, in den die Sicherungshülse beim radialen Einformen eingeformt wird. So ist die Sicherungshülse nicht nur gegen eine Drehung gegenüber dem Schraubteil fixiert, sondern auch in axialer Richtung. Hierdurch erhält man eine weiter erhöhte Fixierung der Schraubverbindung.

In einer weiteren vorteilhaften Ausgestaltung besteht die Sicherungshülse aus einem im Vergleich zum Material des Schraubteils weichen Metall. Besonders vorteilhaft ist hierbei die Ausgestaltung der Sicherungshülse aus Weicheisen.

Hierdurch ist eine leichte Verformbarkeit gewährleistet, die jedoch die notwendige Festigkeit aufweist.

In einer weiteren vorteilhaften Ausgestaltung ist die Sicherungshülse aus einem Kunststoff gefertigt, so dass eine leichte Verformbarkeit gegeben ist bei niedrigen Kosten und gegenüber einem Metall deutlich verringertem Gewicht.

### Zeichnungen

In der Zeichnung ist ein Ausführungsbeispiel der erfindungsgemäßen Schraubsicherung zur Drehblockierung dargestellt. Es zeigt
- Figur 1 ein Kraftstoffeinspritzventil für Brennkraftmaschinen mit einem darin eingeschraubten Schraubteil,
- Figur 2 eine Vergrößerung des mit II bezeichneten Ausschnitts von Figur 1,
- Figur 3 eine geschnittene Darstellung des mit III bezeichneten Ausschnitts von Figur 2,
- Figur 4 einen Querschnitt entlang der Linie IV-IV in Figur 3,
- Figur 5 einen Querschnitt entlang der Linie V-V der Figur 3 und
- Figur 6 ein weiteres Ausführungsbeispiel eines erfindungsgemäßen Schräubteils mit Schraubsicherung.

### Beschreibung des Ausführungsbeispiels

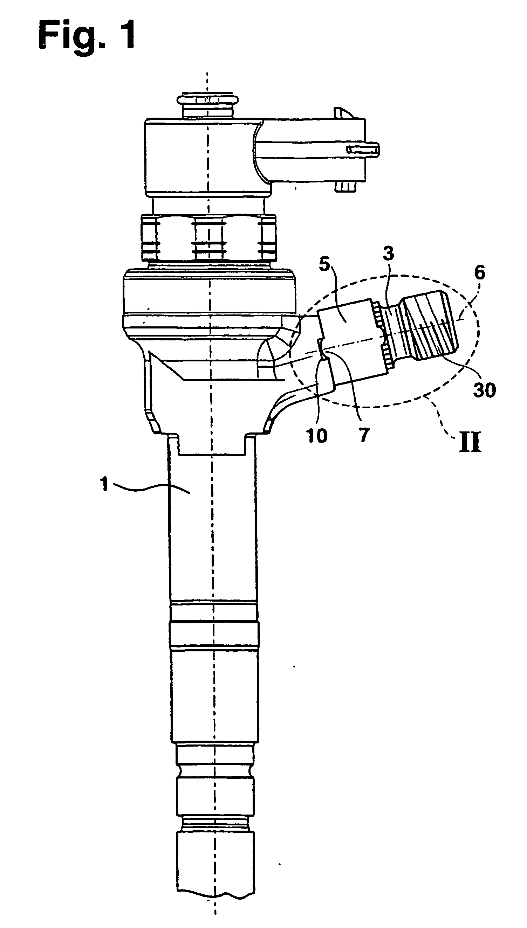

In Figur 1 ist ein Ausführungsbeispiel der erfindungsgemäßen Schraubsicherung dargestellt. Ein Bauteil 1, der hier als Ventilkörper 1 dargestellt ist, ist Teil eines Kraftstoffeinspritzventils für Brennkraftmaschinen. Am Ventilkörper 1 ist ein Schraubteil 3 angeordnet, das hier als Druckrohrstutzen ausgebildet ist und durch das dem Ventilkörper 1 Kraftstoff zugeführt werden kann. Den Druckrohrstutzen 3 umgebend ist eine Sicherungshülse 5 angeordnet, die als Hohlzylinder ausgebildet ist und die mit einer Anformung 7 in eine am Ventilkörper 1 ausgebildete Ausnehmung 10 eingreift. Hierdurch wird die Sicherungshülse 5 gegenüber dem Ventilkörper 1 gegen Rotation um die eigene Achse gesichert. Der Druckrohrstutzen 3 ist hierbei im wesentlichen rotationssymmetrisch aufgebaut und weist eine Längsachse 6 auf, die auch mit der Längsachse der Sicherungshülse 5 zusammenfällt. An seinem dem Ventilkörper 1 abgewandten Ende weist der Druckrohrstutzen 3 ein Anschlussgewinde 30 auf, an das beispielsweise eine Kraftstoffhochdruckleitung angeschlossen werden kann.

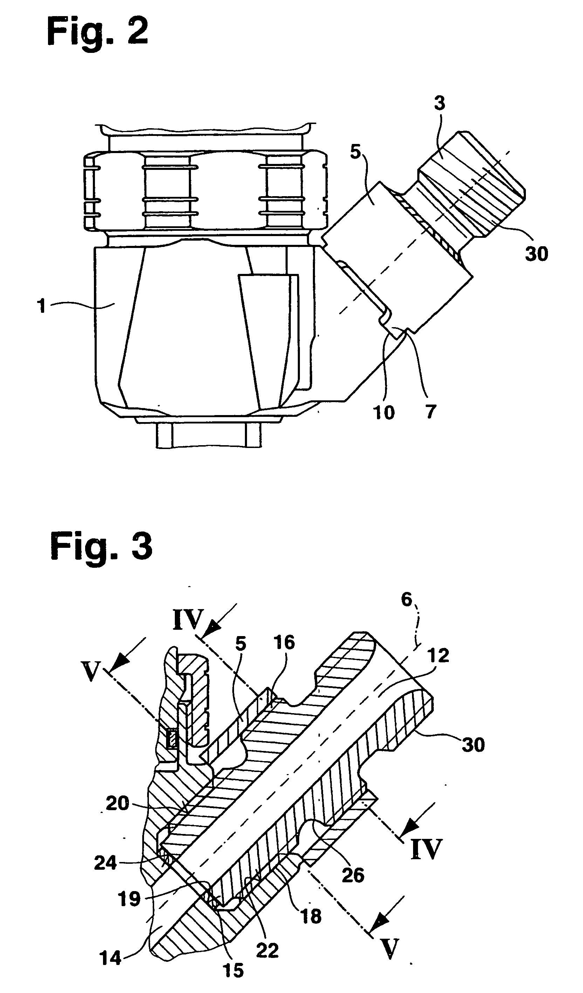

In Figur 2 ist eine Vergrößerung des mit II bezeichneten Bereichs der Figur 1 dargestellt. Hier wird noch einmal die Ausbildung der Anformung 7 und der Ausnehmung 10 verdeutlicht, wobei hier mehrere Anformungen 7 über den Umfang der Sicherungshülse 5 verteilt angeordnet sind. Hierdurch wird eine gleichmäßige Einleitung der Kraft über den Umfang der Sicherungshülse 5 erreicht, falls auf diese ein Drehmoment wirkt.

In Figur 3 ist eine geschnittene Darstellung des mit III bezeichneten Ausschnitts der Figur 2 dargestellt, wodurch der genaue Aufbau verdeutlicht wird. Der Druckrohrstutzen 3 weist eine Zulaufbohrung 12 auf, die entlang der Längsachse 6 verläuft und sich über die gesamte Länge des Druckrohrstutzen 3 erstreckt. An seinem dem Ventilkörper 1 zugewandten Endbereich ist am Druckrohrstutzen 3 ein Einschraubgewinde ausgebildet, das als Außengewinde 20 ausgebildet ist und in ein Gewinde eingreift, welches als Innengewinde 22 an der Wand einer am Ventilkörper 1 angeordneten Aufnahmeöffnung 18 ausgebildet ist. Durch Einschrauben des Druckrohrstutzens 3 in das Innengewinde 22 der Aufnahmeöffnung 18 gelangt die an der Stirnseite des Druckrohrstutzens 3 ausgebildete Dichtfläche 24 unter Zwischenlage eines Dichtrings 15 an der Grundfläche 19 der Aufnahmeöffnung 18 zur Anlage. Hierdurch ergibt sich eine dichte Verbindung der Zulaufbohrung 12 zu einem im Ventilkörper 1 ausgebildeten Zulaufkanal 14, so dass Kraftstoff durch den Druckrohrstutzen 3 auch unter hohem Druck in den Ventilkörper 1 geleitet werden kann.

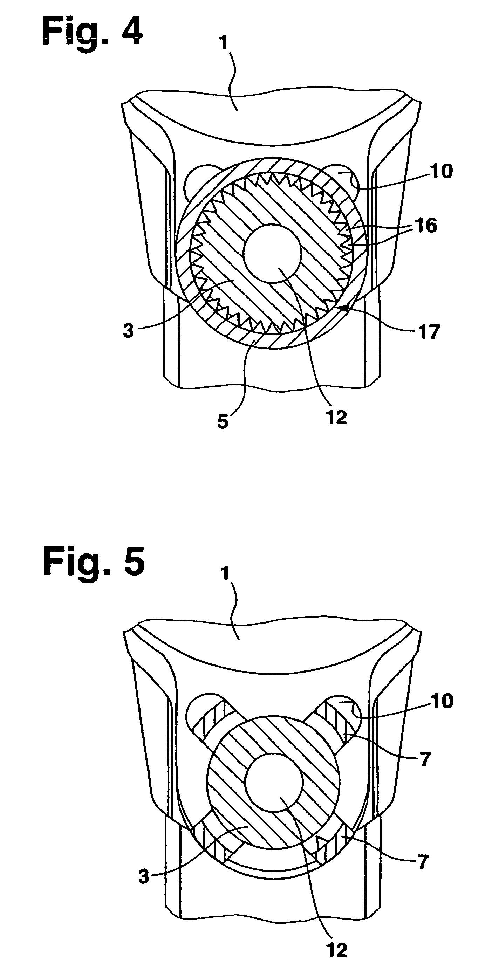

In dem in Längsrichtung gesehen mittleren Bereich des Druckrohrstutzens 3 ist an der Außenmantelfläche Vertiefungen 16 angeordnet, die als Längsnuten mit einem V-förmigen Querschnitt ausgebildet sind und die ein Kerbprofil 17 formen. Figur 4 zeigt hierzu einen Querschnitt entlang der Linie IV-IV der Figur 3. Dem Ventilkörper 1 zu schließt sich an das Kerbprofil 17 ein Freistich 26 an, der den Druckrohrstutzen 3 auf seinem gesamten Umfang umgibt. Den Druckrohrstutzen 3 umgebend ist eine Sicherungshülse 5 angeordnet, die als Hohlzylinder ausgebildet ist und einen Innendurchmesser aufweist, der entweder größer als der Außendurchmesser des Kerbprofils 17 oder geringfügig kleiner als dieses ist, so dass sich in diesem Fall bei der Anordnung der Sicherungshülse 5 über dem Kerbprofil 17 des Druckrohrstutzens 13 bereits eine leichte Verzahnung mit der Sicherungshülse 5 ergibt. Je nach Ausführung reicht diese leichte Verzahnung bereits für eine Drehfixierung der Sicherungshülse 5 aus, so dass keine weitere Verformung der Sicherungshülse 5 erfolgen muss. An dem dem Ventilkörper 1 abgewandten Endbereich des Druckrohrstutzens 3 ist ein Anschlussgewinde 30 ausgebildet, das koaxial zum Außengewinde 20 ausgebildet ist und dazu dient, beispielsweise eine Kraftstoffleitung an den Druckrohrstutzen 3 anzuschrauben.

In Figur 5 ist ein Querschnitt durch Figur 3 entlang der Linie V-V dargestellt. Jeweils im Winkel von 90° um die Längsachse 6 des Druckrohrstutzens 3 versetzt sind am Ventilkörper 1 vier Ausnehmungen 10 ausgebildet. Am Druckrohrstutzen 3 sind an dessen dem Ventilkörper 1 zugewandten Ende entsprechend vier Anformungen 7 ausgebildet, die in diese vier Ausnehmungen 10 eingreifen. Hierdurch wird eine Drehung der Sicherungshülse 5 um die Längsachse 6 bezüglich des Ventilkörpers 1 verhindert.

Die Montage des Druckrohrstutzens 3 und der Sicherungshülse 5 wird wie folgt durchgeführt: Der Druckrohrstutzen 3 wird in das Innengewinde 20 der Aufnahmeöffnung 18 eingeschraubt, bis die Dichtfläche 24 an der Grundfläche 19 der Aufnahmeöffnung 18 zur Anlage kommt und mit dem erforderlichen Anzugsmoment gegen die Grundfläche 19 verspannt ist. Anschließend wird die Sicherungshülse 5 in axialer Richtung über den Druckrohrstutzen 3 geschoben, bis die an der Sicherungshülse 5 ausgebildeten Anformungen 7 in die entsprechenden Ausnehmungen 10 am Ventilkörper 1 eingreifen. Mit einem geeigneten Werkzeug, das beispielsweise aus zwei im wesentlichen halbkreisförmigen Spannbacken besteht, wird nun die Sicherungshülse 5 in radialer Richtung im Bereich des Kerbprofils 17 nach innen eingeformt, so dass sich das weiche Metall der Sicherungshülse 5 in das Kerbprofil 17 einformt. Durch eine geeignete Form der Presswerkzeuge kann darüber hinaus erreicht werden, dass die Sicherungshülse 5 auch in den Freistich 26 eingeformt wird. Die nunmehr verformte Sicherungshülse 5 ist durch das Kerbprofil 17 gegen eine Drehung bezüglich des Druckrohrstutzens 3 gesichert. Andererseits kann sich die Sicherungshülse 5 bedingt durch die Anformungen 7 die in die Ausnehmungen 10 eingreifen auch nicht in Rotationsrichtung bezüglich des Ventilkörpers 1 bewegen, so dass sich dadurch eine Verdrehsicherung des Druckrohrstutzens 3 im Innengewinde 20 der Aufnahmeöffnung 18 ergibt. Durch die Einformung der Sicherungshülse 5 in den Freistich 26 wird darüber hinaus verhindert, dass sich die Sicherungshülse 5 in Längsrichtung auf dem Ventilkörper 1 bewegt und so eventuell mit den Anformungen 7 aus den Ausnehmungen 10 austaucht. Da der Druckrohrstutzen 3 nun bezüglich des Ventilkörpers 1 fixiert ist, kann beispielsweise eine Kraftstoffleitung 3 auf das Anschlussgewinde 30 aufgeschraubt und wieder gelöst werden, ohne dass sich der Druckrohrstutzen 3 im Innengewinde 22 der Aufnahmeöffnung 18 lösen kann.

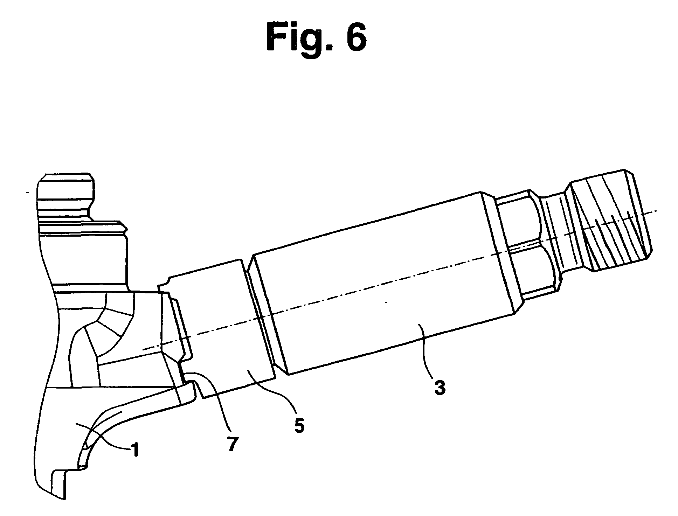

In Figur 6 ist ein weiteres Ausführungsbeispiel der erfindungsgemäßen Schraubsicherung dargestellt. Durch die Form des Druckrohrstutzens 3 kann in diesem Fall die Montage der Sicherungshülse 5 nicht nach dem Einschrauben des Druckrohrstutzens 3 in dem Ventilkörper 1 erfolgen. Die Sicherungshülse 5 muss vor dem Einschrauben des Druckrohrstutzens 3 über das Kerbprofil 17 geschoben werden und der Druckrohrstutzen 3 mit darauf befindlicher Sicherungshülse 5 in den Ventilkörper 1 eingeschraubt werden. Die Sicherungshülse 5 wird danach in der oben beschriebenen Art und Weise auf dem Druckrohrstutzen 3 fixiert.

Es ist ohne allzu großen Aufwand möglich die Sicherungshülse 5 so zu lösen, dass der Druckrohrstutzen 3 wieder aus dem Ventilkörper 1 herausgeschraubt werden kann, insbesondere, wenn die Sicherungshülse 5 aus einem vergleichsweise weichen Metall besteht. Die Sicherungshülse 5 wird hierfür auf ihrer Mantelfläche in der gesamten Länge aufgesprengt, so dass sie aufgebogen und dann entfernt werden kann. Das Aufsprengen kann mittels eines Sprengkeils erfolgen, der die Sicherungshülse 5 in einem Arbeitsschritt auftrennt. Ein besonders geeignetes Material der Sicherungshülse 5 ist Weicheisen, welches eine deutlich geringere Härte aufweist als der Stahl, aus dem der Druckrohrstutzen 3 gefertigt ist, so dass die Sicherungshülse 5 leicht verformbar ist.

Neben der Ausbildung der Sicherungshülse 5 aus einem weichen Metall ist auch die Ausbildung aus einem Kunststoff möglich. Kunststoffe sind in aller Regel erheblich kostengünstiger als Metall und erheblich leichter. Eine Einformung der Sicherungshülse 5 in das Kerbprofil 17 ist bei Verwendung eines thermoplastischen Kunststoffs auch unter Wärmeeinwirkung denkbar, da sich der Kunststoff sonst schlecht plastisch verformen lässt.

Neben der Schraubsicherung eines Druckrohrstutzens in einem Ventilkörper 1 kann die erfindungsgemäße Schraubsicherung zur Drehblockierung eines Schraubteils in einem Gewinde auch bei jeder anderen Verbindung eines Schraubteils mit einem Bauteil angewandt werden. Die Sicherungshülse 5 ist hierbei einfach zu montieren, kostengünstig und benötigt nur einen sehr kleinen Bauraum. Die einzige bauliche Änderung, die am Schraubteil bzw. dem Druckrohrstutzen 3 vorgenommen werden muss, ist die an der Mantelfläche ausgebildeten Vertiefungen 16 bzw. das Kerbprofil 17. Je nach dem, welches Drehmoment auf das Schraubteil 3 durch die Sicherungshülse 5 kompensiert werden soll, muss dieses Kerbprofil 17 mehr oder weniger tief sein und die Sicherungshülse 5 entsprechend tief oder weniger tief in das Kerbprofil 17 eingeformt werden. Hierdurch ergibt sich - wenn überhaupt - nur eine sehr geringe Schwächung des Schraubteils 3 durch das Kerbprofil 17, so dass im Falle der Ausbildung des Schraubteils 3 als Druckrohrstutzen dieselbe Druckbeständigkeit in der Zulaufbohrung 12 herrscht wie ohne das Kerbprofil 17.

## Patentansprüche

1. Kraftstoffeinspritzventil mit einem Ventilhaltekorper (1) und einem Druckrohrstutzen (3), durch den Kraftstoff dem Kraftstoffeinspritzventil zugeleitet wird, und mit einer Schraubsicherung zur Drehblockierung des Druckrohrstutzens (3) in einem Gewinde (22), welches im Ventilhaltekörper (1) ausgebildet ist, und mit einem am Druckrohrstutzen (3) ausgebildeten Einschraubgewinde (20), das in das am Ventilhaltekörper (1) ausgebildete Gewinde (22) eingreift, **dadurch gekennzeichnet, dass** eine Sicherungshülse (5) den Druckrohrstutzen (3) umgibt, wobei die Sicherungshülse (5) in Drehrichtung des Gewindes (22) bezüglich des Ventilhaltekörpers (1) fixierbar ist, und mit am Druckrohrstutzen (3) ausgebildeten Vertiefungen (16), in die die Sicherungshülse (5) eingeformt ist.

2. Kraftstoffeinspritzventil nach Anspruch 1, **dadurch gekennzeichnet, dass** am Ventilhaltekörper (1) Ausnehmungen (10) ausgebildet sind, in die die Sicherungshulse (5) mit entsprechenden Anformungen (7) eingreift, so dass die Sicherungshülse (5) in Drehrichtung des Gewindes (22) gegen den Ventilhaltekörper (1) fixiert ist.

3. Kraftstoffeinspritzventil nach Anspruch 2, **dadurch gekennzeichnet, dass** wenigstens zwei Anformungen (7) an der Sicherungshülse (5) ausgebildet sind, die vorzugsweise gleichmäßig über den Umfang verteilt angeordnet sind.

4. Kraftstoffeinspritzventil nach Anspruch 1, **dadurch gekennzeichnet, dass** die Vertiefungen (16) am Druckrohrstutzen (3) ein Kerbprofil (17) bilden und an einem zylinderförmigen Abschnitt des Druckrohrstutzens (3) angeordnet sind, in welches Kerbprofil (17) die Sicherungshülse (5) einformbar ist.

5. Kraftstoffeinspritzventil nach Anspruch 4, **dadurch gekennzeichnet, dass** der Druckrohrstutzen (3) zumindest näherungsweise rotationssymmetrisch bezüglich der Längsachse des Einschraubgewindes (20) ausgebildet ist und dass am Druckrohrstutzen (3) ein in Umfangsrichtung verlaufender Freistich (26) ausgebildet ist, in den die Sicherungshülse (5) beim Verformen eingreift und so die Sicherungshülse (5) gegen eine axiale Verschiebung auf dem Druckrohrstutzen (3) sichert.

6. Kraftstoffeinspritzventil nach Anspruch 1, **dadurch gekennzeichnet, dass** am Druckrohrstutzen (3) ein Anschlussgewinde (30) ausgebildet ist, das koaxial zum Einschraubgewinde (20) angeordnet ist.

7. Kraftstoffeinspritzventil nach einem der vorstehenden Ansprüche, **dadurch gekennzeichnet, dass** die Sicherungshülse (5) aus einem im Vergleich zum Material des Druckrohrstutzens (3) weichen Metall besteht.

8. Kraftstoffeinspritzventil nach Anspruch 7, **dadurch gekennzeichnet, dass** das Material der Sicherungshülse (5) Weicheisen ist.

## Claims

1. Fuel injection valve having a valve holding body (1) and a pressure-tube connection piece (3) through which fuel is fed to the fuel injection valve, and having a screw locking device for blocking the rotation of the pressure-tube connection piece (3) in a thread (22) which is formed in the valve holding body (1), and having a screw-in thread (20) which is formed on the pressure-tube connection piece (3) and engages into the thread (22) formed on the valve holding body (1), **characterized in that** a securing sleeve (5) surrounds the pressure-tube connection piece (3), it being possible to fix the securing sleeve (5) in the rotational direction of the thread (22) with respect to the valve holding body (1), and having depressions (16) which are formed on the pressure-tube connection piece (3) and into which the securing sleeve (5) is moulded.

2. Fuel injection valve according to Claim 1, **characterized in that** recesses (10) are formed on the valve holding body (1), into which recesses (10) the securing sleeve (5) engages by means of corresponding moulded projections (7), with the result that the securing sleeve (5) is fixed against the valve holding body (1) in the rotational direction of the thread (22).

3. Fuel injection valve according to Claim 2, **characterized in that** at least two moulded projections (7) are formed on the securing sleeve (5), which are distributed over the circumference, preferably uniformly.

4. Fuel injection valve according to Claim 1, **characterized in that** the depressions (16) on the pressure-tube connection piece (3) form a notched profile (17) and are arranged on a cylindrical section of the pressure-tube connection piece (3), into which notched profile (17) the securing sleeve (5) can be moulded.

5. Fuel injection valve according to Claim 4, **characterized in that** the pressure-tube connection piece (3) is configured so as to be at least approximately rotationally symmetrical with respect to the longitudinal axis of the screw-in thread (20), and **in that** an undercut (26) which extends in the circumferential direction is formed on the pressure-tube connection piece (3), into which undercut (26) the securing sleeve (5) engages during deformation and thus secures the securing sleeve (5) against axial displacement on the pressure-tube connection piece (3).

6. Fuel injection valve according to Claim 1, **characterized in that** a connection thread (30) which is arranged coaxially with respect to the screw-in thread (20) is formed on the pressure-tube connection piece (3).

7. Fuel injection valve according to one of the preceding claims, **characterized in that** the securing sleeve (5) is composed of a metal which is soft in comparison with the material of the pressure-tube connection piece (3).

8. Fuel injection valve according to Claim 7, **characterized in that** the material of the securing sleeve (5) is soft iron.

## Revendications

1. Injecteur de carburant comprenant un corps d'injecteur (1), une tubulure de pression (3) à travers laquelle le carburant est amené à l'injecteur, une sécurité à vis pour bloquer en rotation la tubulure (3) dans un filetage (22) réalisé dans le corps d'injecteur (1) ainsi qu'un filetage d'insertion (20) réalisé dans la tubulure de pression (3) et en prise dans le filetage (22) du corps d'injecteur (1),
**caractérisé en ce qu'**
une douille de sécurisation (5) entoure la tubulure de pression (3) et peut être bloquée dans le sens de rotation du filetage (22) par rapport au corps d'injecteur (1), et la tubulure de pression (3) comporte des cavités (16) recevant la douille de sécurisation (5) engagée par combinaison de formes.

2. Injecteur de carburant selon la revendication 1,
**caractérisé en ce que**
le corps d'injecteur (1) présente des évidements (10) dans lesquels la douille de sécurisation (5) est engagée par des parties de forme correspondantes (7), de sorte que la douille (5) est bloquée dans le sens de rotation du filetage (22) sur le corps d'injecteur (1).

3. Injecteur de carburant selon la revendication 2,
**caractérisé en ce qu'**
au moins deux parties de forme (7) sont réalisées sur la douille de sécurisation (5) en étant de préférence réparties régulièrement à la périphérie de celle-ci.

4. Injecteur de carburant selon la revendication 1,
**caractérisé en ce que**
des cavités (16) sur la tubulure de pression (3) ont un profil d'entaille (17) et sont disposées sur une partie cylindrique de la tubulure de pression (3), et dans le profil d'entaille (17), la douille de sécurisation (5) peut être engagée par combinaison de formes.

5. Injecteur de carburant selon la revendication 4,
**caractérisé en ce que**
la tubulure de pression (3) est au moins approximativement symétrique en rotation autour de l'axe longitudinal du filetage interne (20), et sur cette tubulure se trouve une rainure de dégagement (26) périphérique, dans laquelle la douille de sécurisation (5) est engagée par déformation et ainsi empêche la tubulure (3) de se déplacer axialement.

6. Injecteur de carburant selon la revendication 1,
**caractérisé en ce que**
la tubulure de pression (3) porte un filetage de raccordement (30) qui est coaxial au filetage interne (20).

7. Injecteur de carburant selon une des revendications précédentes,
**caractérisé en ce que**
la douille de sécurisation (5) est faite d'un métal qui est relativement mou par rapport au matériau constituant la tubulure de pression (3).

8. Injecteur de carburant selon la revendication 7,
**caractérisé en ce que**
le métal constituant la douille de sécurisation (5) est du fer doux.
